# EUROPÄISCHE PATENTSCHRIFT

(11) **EP 0 744 803 B1**
(45) Veröffentlichungstag und Bekanntmachung des Hinweises auf die Patenterteilung: **15.03.2000**
(21) Anmeldenummer: 96810299.6
(22) Anmeldetag: 13.05.1996
(51) Int. Cl.: H02B 13/035

(54) **Trenner für eine metallgekapselte gasisolierte Hochspannungschaltanlage**
Isolator switch for metal-clad, high voltage switchgear
Sectionneur pour une installation de commutation à haute tension, blindé et à isolation gazeuse

(30) Priorität: 26.05.1995 DE 19519301
(43) Veröffentlichungstag der Anmeldung: 27.11.1996
(73) Patentinhaber: ASEA BROWN BOVERI AG, 5400 Baden (CH)
(72) Erfinder: Schifko, Herbert, 8152 Glattbrugg (CH); Forss, Sven, 3007 Ber (CH); Kostovic, Jadran, 5432 Neuenhof (CH); Tecchio, Piero, 5452 Oberrohrdorf (CH)
(74) Vertreter: Kaiser, Helmut, Dr.

(56) Entgegenhaltungen:
- EP-A- 0 012 708
- DE-U- 8 813 504
- FR-A- 2 111 871
- FR-A- 2 346 884
- FR-A- 2 629 283
- I.E.E.E. TRANSACTIONS ON POWER DELIVERY, Bd. 2, Nr. 3, 1987, NEW YORK, US, XP002016346 T. MAEDA ET AL.: "Development of D-GIS aimed at easy restoration from internal fault."

## Beschreibung

### TECHNISCHES GEBIET

Bei der Erfindung wird ausgegangen von einem Trenner für eine metallgekapselte gasisolierte Hochspannungsschaltanlage gemäss den Oberbegriffen der unabhängigen Ansprüche.

### STAND DER TECHNIK

Die Erfindung nimmt dabei Bezug auf einen Stand der Technik, wie er sich beispielsweise aus der Offenlegungsschrift DE-A1-42 10 545 ergibt. In dieser Veröffentlichung ist ein Winkeltrenner für eine metallgekapselte gasisolierte Hochspannungsschaltanlage beschrieben, mit zwei in der isoliergasgefüllten Metallkapselung angeordneten und längs einer Achse miteinander kontaktierbaren oder voneinander trennbaren Schaltstücken mit jeweils einem stiftförmigen, axial erstreckten Vorzündkontakt, welcher bei einem beider Schaltstücke als Nachlaufkontakt ausgebildet ist, und mit einem den Vorzündkontakt eines feststehenden beider Schaltstücke koaxial umgebenden Festkontakt und einem an einem beweglichen beider Schaltstücke vorgesehenen Laufkontakt, welcher in der Einschaltposition mit dem Festkontakt einen Dauerstrompfad bildet.

Dieser Trenner weist eine vergleichsweise grosse axiale Ausdehnung auf. Durch den Nachlaufkontakt wurden Konstruktionselemente in das bewegliche Schaltstück eingebracht, welche in axialer Richtung eine erhebliche Ausdehnung besitzen und hochspannungsmässig abgeschirmt werden müssen. Dies führt zu einer nicht unerheblichen Vergrösserung der bereits zu einem wesentlichen Teil durch die Isolierdistanz der offenen Trennstrecke bestimmten Trennschaltergeometrie.

Aus der Offenlegungsschrift DE-A1-31 09 669 ist ein metallgekapselter gasisolierter Trenner bekannt, der sich entlang einer zentralen Achse erstreckt. Dieser Trenner weist ein Gehäuse auf, welches mit mehreren, verschiedene Durchmesser aufweisenden, mit Flanschen versehenen Öffnungen ausgestattet ist, die für den Anbau von Zusatzgeräten wie Erder, Spannungswandler, Berstscheiben, usw. vorgesehen sind. Diese mit Flanschen versehenen Öffnungen weisen Achsen auf, die sich senkrecht zur zentralen Achse erstrecken. Zusätzlich zu diesen Öffnungen sind noch die beiden mit Flanschen versehenen Öffnungen für die Stromführung vorhanden. Dieses Gehäuse weist eine vergleichsweise grosse axiale Erstreckung auf. Dieser Trenner weist ebenfalls eine vergleichsweise grosse axiale Ausdehnung auf.

Aus der Offenlegungsschrift DE-A1-43 20 906 ist eine metallgekapselte gasisolierte Hochspannungsanlage bekannt, die mehrere druckdicht miteinander verbundene Gehäuse aufweist, die gleich ausgebildet sind, die jedoch in unterschiedlichen Einbaulagen montiert sind und die mit unterschiedlichen Einbaukomponenten ausgestattet sind. Bei der Montage dieser Gehäuse muss stets darauf geachtet werden, dass bezogen auf die Einbaulage des betreffenden Gehäuses, die richtigen Einbaukomponenten montiert werden. Jedes dieser Gehäuse weist vier Anschlussflansche auf, die drei unterschiedliche Durchmesser aufweisen.

In metallgekapselten gasisolierten Schaltanlagen werden in der Regel drei Trennervarianten eingesetzt, nämlich:
a) Lineartrenner für die Auftrennung gerader Leitungsstücke, wie beispielsweise für die Längstrennung von Sammelschienen oder in geraden Teilen von Abgängen,
b) Abgangstrenner für die Abtrennung von Abzweigungen, die beispielsweise von der Sammelschiene zu Verbrauchern führen, und
c) Winkeltrenner, die bei einer Umlenkung der Strombahn, beispielsweise um einen Winkel von 90°, beispielsweise als Abgangstrenner eingesetzt werden. Derartige Winkeltrenner können insbesondere dort verwendet werden, wo für die Trennstelle besonders wenig Platz verfügbar ist.

In herkömmlichen metallgekapselten gasisolierten Schaltanlagen ist für jeden dieser Trenner ein separates Gehäuse vorgesehen, wobei diese Gehäuse stets voneinander verschieden gestaltet sind. Die Anzahl der in einer Anlage montierten Gehäusevarianten wird dadurch erhöht, was die Fertigung verteuert und die Lagerhaltung erschwert.

Aus der Druckschrift EP 0 012 708 ist ein symmetrisch aufgebautes Trennergehäuse für metallgekapselte gasisolierte Hochspannungsschaltanlagen bekannt, welches vier mit Flanschen versehene Öffnungen aufweist. Dieses Trennergehäuse ist für den Einbau eines dreiphasigen Trenners vorgesehen, und zwar ist es lediglich geeignet für den Einbau eines dreiphasigen Winkeltrenners. Für den Einbau anderer Trennertypen, gleiche Spannungsebene vorausgesetzt, müssten die Abmessungen des Gehäuses wesentlich modifiziert werden.

### KURZE DARSTELLUNG DER ERFINDUNG

Der Erfindung, wie sie in den unabhängigen Patentansprüchen definiert ist, liegt die Aufgabe zugrunde, einen Trenner für eine metallgekapselte gasisolierte Hochspannungsschaltanlage der eingangs genannten Art anzugeben, dessen Abmessungen in axialer Richtung vergleichsweise gering sind, und bei dem sämtliche Trennervarianten in ein für jede Variante gleich ausgebildetes Gehäuse eingebaut werden können.

Es ergeben sich besonders günstige Hochspannungsanlagen, wenn für alle Trennervarianten ein gleichartiges Gehäuse verwendet werden kann. Insbesondere wird die Projektierungsarbeit vereinfacht, wenn alle Varianten mit dem gleichen Trennerbaustein realisiert werden können.

Als besonders vorteilhaft erweist es sich zudem, dass die Halteelemente für die Kontaktträger des Trenners aus vergleichsweise wenigen Gleichteilen für sämtliche Trennervarianten zusammengestellt werden können. Zusammen mit dem einheitlichen Gehäuse ergibt sich ein Trennersystem, welches sehr vielseitig ist, und welches trotzdem nur vergleichsweise wenig auf Lager zu haltende Teile erfordert.

Die Abmessungen des fertigen Trenners, unabhängig davon welche Trennervariante vorliegt, sind in axialer Richtung vorteilhaft klein, was davon herrührt, dass lediglich ein Teil der Länge der Trennstrecke die axiale Erstreckung des Trenners beeinflusst. Bei den Ausführungsbeispielen wird, durch das Abkröpfen der Halteelemente für die Kontakträger, der axiale Platzbedarf für die Hälfte der Länge der Trennstrecke eingespart.

Weitere Ausführungsbeispiele der Erfindung und die damit erzielbaren Vorteile werden nachfolgend anhand der Zeichnung, welche lediglich einen möglichen Ausführungsweg darstellt, näher erläutert.

### KURZE BESCHREIBUNG DER ZEICHNUNG

Es zeigen:
Fig.1 einen Schnitt durch ein Gehäuse eines erfindungsgemässen Trenners,
Fig.2 einen vereinfachten Schnitt durch eine erste Ausführungsform eines erfindungsgemässen Trenners,
Fig.3 einen vereinfachten Schnitt durch eine zweite Ausführungsform eines erfindungsgemässen Trenners,
Fig.4 einen vereinfachten Schnitt durch eine dritte Ausführungsform eines erfindungsgemässen Trenners, und
Fig.5 einen vereinfachten Schnitt durch eine etwas modifizierte Ausführung des erfindungsgemässen Trenners gemäss Fig.4.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

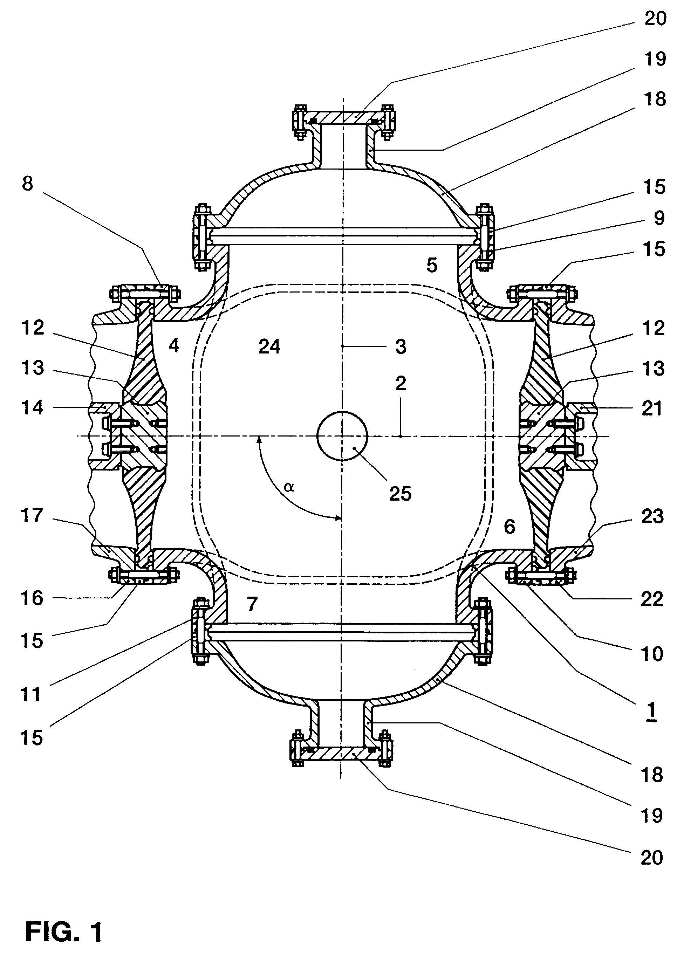

Die Fig.1 zeigt einen Schnitt durch ein schematisch dargestelltes Gehäuse 1 eines erfindungsgemässen Trenners. Das Gehäuse 1 wird in der Regel mit einem Isoliergas unter Druck gefüllt, besonders geeignet ist hierfür Schwefelhexafluorid (SF₆). Die Sichtkanten des Gehäuses 1 sind, der besseren Anschaulichkeit halber, lediglich angedeutet. Dieses Gehäuse 1 wird in der Regel gemeinsam mit den übrigen Kapselungsteilen der gasisolierten Schaltanlage auf Erdpotential gelegt. Das Gehäuse 1 weist zwei in einer Ebene liegende Achsen 2,3 auf, die sich unter einem Winkel α schneiden. Der Winkel α wird in der Regel als rechter Winkel ausgebildet, für besondere Anwendungen sind jedoch auch vom rechten Winkel abweichende Winkel vorstellbar. In der Regel wird das Gehäuse 1 druckdicht aus einer Aluminiumlegierung gegossen. Das Gehäuse 1 weist mindestens vier kreisrunde Öffnungen 4,5,6 und 7 auf, die mit Flanschen 8,9,10 und 11 versehen sind. Dabei ist der Öffnung 4 der Flansch 8, der Öffnung 5 der Flansch 9, der Öffnung 6 der Flansch 10 und der Öffnung 7 der Flansch 11 zugeordnet. Die Öffnungen 4,5,6 und 7 sind so angeordnet, dass sie im Zentrum durch die Achsen 2,3 durchdrungen werden, und zwar durchdringt die Achse 2 die Öffnungen 4 und 6 und die Achse 3 die Öffnungen 5 und 7. Die Flansche 8,9,10 und 11 weisen Flächen auf, die senkrecht zu den jeweiligen Achsen 2,3 angeordnet sind.

Die Öffnung 4 ist hier durch einen scheibenförmig ausgebildeten Isolator 12 verschlossen, der eine elektrisch leitende Eingussarmatur 13 aufweist. Die Eingussarmatur 13 ist mit einem Leiter 14 verschraubt. Der Isolator 12 wird mittels eines Aussenrings 15 gehalten, in den Nuten eingelassen sind für die Aufnahme von nicht dargestellten Dichtungsringen. Der Aussenring 15 ist aus zwei gleich ausgebildeten metallischen, elektrisch leitenden Ringen zusammengesetzt. Der Isolator 12 und der Aussenring 15 werden durch einen mit dem Flansch 8 verschraubten Anschlussflansch 16 eines Nachbargehäuses 17 in Position gehalten. Die Öffnung 5 ist hier durch einen Deckelflansch 18 verschlossen. Zwischen dem Deckelflansch 18 und dem Flansch 9 ist ein Aussenring 15 montiert, der die nötigen, nicht dargestellten Dichtungsringe, aufnimmt. Es ist jedoch auch möglich, auf diesen Aussenring 15 zu verzichten und dafür die Auflagefläche des Deckelflanschs 18 oder die Auflagefläche des Flanschs 9 mit einer Nut für die Aufnahme eines Dichtungsrings zu versehen. Der Deckelflansch 18 ist mit einem Stutzen 19 versehen, der mittels einer verschraubten Abdeckung 20 druckdicht verschlossen ist. In den Deckelflansch 18 bzw. in die Abdeckung 20 können gegebenenfalls eine Berstscheibe und auch Anschlüsse für die Gasversorgung des Gehäuses 1 eingebaut werden.

Die Öffnung 6 ist hier durch einen scheibenförmig ausgebildeten Isolator 12 verschlossen, der eine elektrisch leitende Eingussarmatur 13 aufweist. Die Eingussarmatur 13 ist mit einem Leiter 21 verschraubt. Der Isolator 12 wird aussen mittels eines Aussenrings 15 gehalten, in den Nuten eingelassen sind für die Aufnahme von nicht dargestellten Dichtungsringen. Der Isolator 12 und der Aussenring 15 werden durch einen mit dem Flansch 10 verschraubten Anschlussflansch 22 eines Nachbargehäuses 23 in Position gehalten. Die Öffnung 7 ist hier durch einen Deckelflansch 18 verschlossen. Zwischen dem Deckelflansch 18 und dem Flansch 11 ist ein Aussenring 15 montiert, der die nötigen, nicht dargestellten Dichtungsringe, aufnimmt. Es ist jedoch auch möglich, auf diesen Aussenring 15 zu verzichten und dafür die Auflagefläche des Deckelflanschs 18 oder die Auflagefläche des Flanschs 11 mit einer Nut für die Aufnahme eines Dichtungsrings zu versehen. Der Deckelflansch 18 ist mit einem Stutzen 19 versehen, der mittels einer verschraubten Abdeckung 20 druckdicht verschlossen ist.

Das Gehäuse 1 und die oben beschriebenen Verschlussteile umschliessen einen Innenraum 24, in den die mit Hochspannung beaufschlagten Aktivteile der verschiedenen Trennervarianten eingebaut werden können. Die Abdeckungen 20 können für den Einbau der unterschiedlichsten Zusatzgeräte verwendet werden. Das Gehäuse 1 kann auch mit zusätzlichen Stutzen versehen werden, die für den Einbau von Sensoren und Sichtfenstern zur optischen Kontrolle der Trennerstellung verwendet werden können. In der Fig.l ist im Zentrum des Gehäuses 1 ein Sichtfenster 25 vorgesehen, welches in einen zylindrisch ausgebildeten Stutzen eingebaut ist, dessen Mittelachse senkrecht zu der Ebene verläuft, in welcher die Achsen 2 und 3 liegen, und welche zudem genau durch den Schnittpunkt der Achsen 2 und 3 geht. In die gegenüber liegende Wand des Gehäuses 1 ist an der genau gleichen Stelle ein gleich ausgebildetes Sichtfenster vorgesehen. Die Trennstelle aller Trennervarianten ist in dem Gehäuse 1 jeweils so zentral angeordnet, dass sie durch das oben beschriebene Sichtfenster 25 kontrollierbar ist.

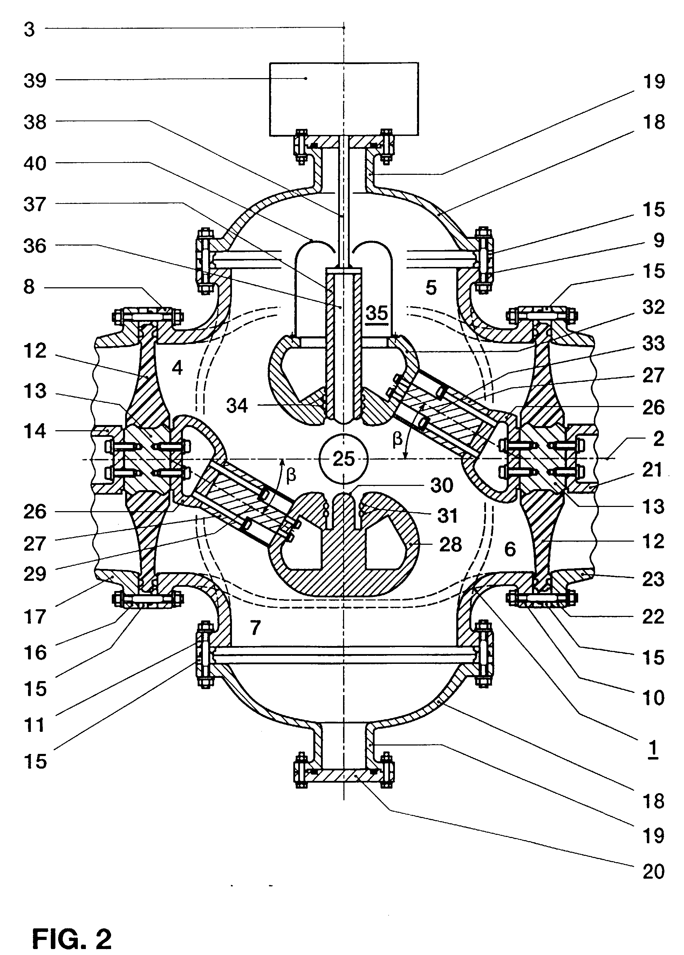

Die Fig.2 zeigt einen vereinfachten Schnitt durch eine schematisch dargestellte erste Ausführungsform eines Trenners für metallgekapselte gasisolierte Hochspannungsschaltanlagen in ausgeschaltetem Zustand. Dieser Trenner ist als Längstrenner ausgebildet, wie er beispielsweise im Verlauf von metallgekapselten gasisolierten Sammelschienen vorgesehen wird. Die Leiter 14 und 21 stellen hier die jeweiligen Enden der auf Hochspannungspotential liegenden Sammelschienenabschnitte dar. Der Leiter 14 ist mit der metallischen Eingussarmatur 13 des linken Isolators 12 verschraubt. Auf der dem Leiter 14 abgewandten Seite der Eingussarmatur 13 ist ein dielektrisch günstig ausgebildetes elektrisch leitendes Winkelverbindungsstück 26 angeschlossen, welches eine um einen Winkel β gegen die Achse 2 geneigte Anschlussfläche aufweist. Der Winkel β weist hier den Wert 30° auf, es sind jedoch, entsprechend der Geometrie des Gehäuses 1, auch andere Werte des Winkel β vorstellbar, ein Winkelbereich von 25° bis 35°für diesen Winkel β lässt sich in der Regel sinnvoll realisieren. Die geneigte Anschlussfläche ist mit einem zylindrisch ausgebildeten Zwischenstück 27 verschraubt. Die der Anschlussfläche entgegengesetzte Seite des Zwischenstücks 27 ist mit einem Kontaktträger 28 verschraubt. Das Zwischenstück 27 erstreckt sich entlang einer Achse 29, die in der gleichen Ebene liegt wie die Achsen 2 und 3 und die gegenüber der Achse 2 um den Winkel β geneigt ist. Der Kontaktträger 28 ist dielektrisch günstig ausgebildet, er ist aus Metall gefertigt. In den Kontaktträger 28 ist ein zylindrisch ausgebildeter Gegenkontakt 30 eingelassen, der als feststehende Vorzündelektrode des Trenners dient. In den Kontakträger 28 sind zudem Spiralkontakte 31 eingelassen, die bei geschlossenem Trenner die Stromführung übernehmen. Der Gegenkontakt 30 erstreckt sich in Richtung der Achse 3, welche zugleich die zentrale Achse des Gegenkontakts 30 bildet.

Der Leiter 21 ist mit der metallischen Eingussarmatur 13 des rechten Isolators 12 verschraubt. Auf der dem Leiter 21 abgewandten Seite der Eingussarmatur 13 ist ein dielektrisch günstig ausgebildetes elektrisch leitendes Winkelverbindungsstück 26 angeschlossen, welches eine um einen Winkel β gegen die Achse 2 geneigte Anschlussfläche aufweist. Es wird darauf geachtet, dass diese beiden Winkel β stets den gleichen Wert aufweisen. Dieser Winkel β weist demnach hier ebenfalls den Wert 30° auf. Die geneigte Anschlussfläche ist mit einem zylindrisch ausgebildeten Zwischenstück 27 verschraubt. Die der Anschlussfläche entgegengesetzte Seite des Zwischenstücks 27 ist mit einem Kontaktträger 32 verschraubt. Das Zwischenstück 27 erstreckt sich entlang einer Achse 33, die in der gleichen Ebene liegt wie die Achsen 2 und 3 und die gegenüber der Achse 2 um den Winkel β geneigt ist. Die Achse 33 verläuft parallel zur Achse 29.

Der Kontaktträger 32 ist dielektrisch günstig ausgebildet, er ist aus Metall gefertigt. In den Kontaktträger 32 sind Spiralkontakte 34 für die Stromführung eingelassen. Im Zentrum des Kontaktträgers 32 ist der bewegliche Trennerkontakt 35 angeordnet. Der bewegliche Trennerkontakt 35 ist zylindrisch ausgebildet, seine Achse fällt mit der Achse 3 zusammen. Der bewegliche Trennerkontakt 35 weist einen Schaltstift 36 auf, der von einem rohrförmig ausgebildeten Kontaktrohr 37 umschlossen ist. Beim Einschalten des Trenners macht das Kontaktrohr 37 nach dem Schaltstift 36 Kontakt mit den Spiralkontakten 31 des Kontaktträgers 28, beim Ausschalten des Trenners löst sich zuerst das Kontaktrohr 37 von den Spiralkontakten 31 des Kontaktkörpers 28, der Schaltstift 36 löst sich erst danach vom Gegenkontakt 30. Eine Isolierstange 38, die durch einen Antrieb 39 betätigt wird, setzt den beweglichen Trennerkontakt 35 in Bewegung. Der Antrieb 39 ist auf dem oberen Stutzen 19 befestigt. Die Isolierstange 38 wird druckdicht aus dem Gehäuse 1 herausgeführt. Die Isolierstange 38 wird über ein Hebelgetriebe bewegt, und als druckdichte Durchführung wird in der Regel eine Drehdurchführung verwendet. Die dem Antrieb 39 zugewandte Seite des beweglichen Trennerkontakts 35 ist mittels einer dielektrisch günstig ausgebildeten Abschirmung 40 aus einem elektrisch leitenden Material abgedeckt. Der bewegliche Trennerkontakt 35 erstreckt sich entlang der Achse 3, welche zugleich die zentrale Achse dieses Kontakts bildet. Die Spiralkontakte 34 umschliessen das Kontaktrohr 37 und verbinden es elektrisch leitend mit dem Kontaktträger 32.

Im eingeschalteten Zustand des Trenners fliesst der Strom vom Leiter 14 durch die Eingussarmatur 13, das Winkelverbindungsstück 26, das Zwischenstück 27, den Kontaktträger 28, die Spiralkontakte 31, das Kontaktrohr 37, die Spiralkontakte 34, den Kontaktträger 32, das Zwischenstück 27, das Winkelverbindungsstück 26 und die Eingussarmatur 13 in den Leiter 21.

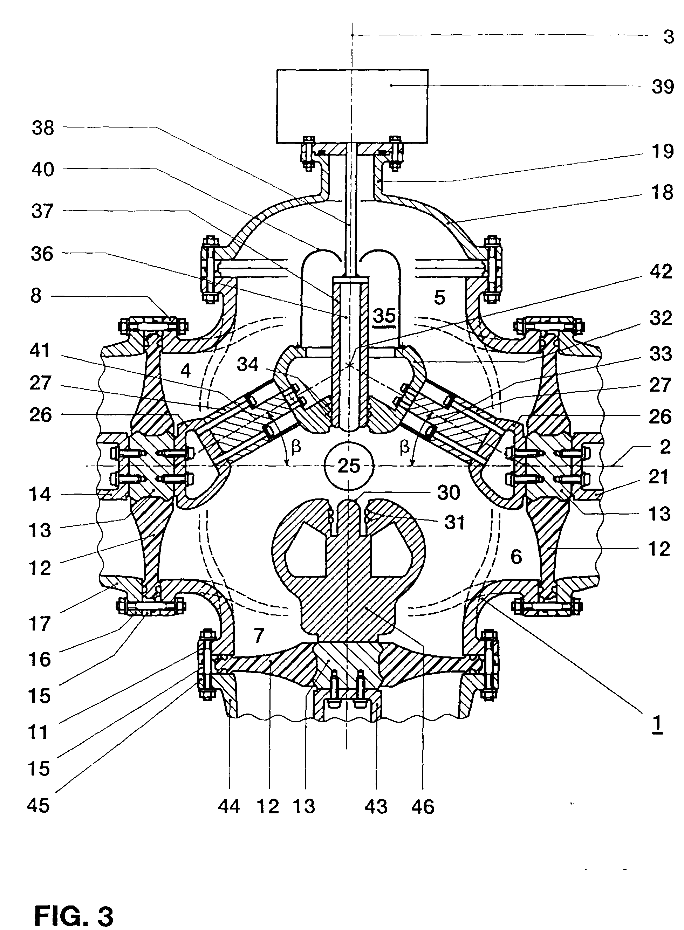

Die Fig.3 zeigt einen vereinfachten Schnitt durch eine schematisch dargestellte zweite Ausführungsform eines Trenners für metallgekapselte gasisolierte Hochspannungsschaltanlagen in ausgeschaltetem Zustand. Dieser Trenner ist als Abgangstrenner ausgebildet, wie er beispielsweise in metallgekapselten gasisolierten Hochspannungsschaltanlagen vorgesehen wird, um einen Abgang oder eine Einspeisung mit der Sammelschiene zu verbinden oder von dieser abzutrennen. Die Leiter 14 und 21 stellen hier die jeweiligen Enden der auf Hochspannungspotential liegenden Sammelschienenabschnitte dar, allerdings sind hier diese beiden Leiter 14 und 21, wie aus der Fig.3 ersichtlich, elektrisch leitend miteinander verbunden. Der Leiter 14 ist mit der metallischen Eingussarmatur 13 des linken Isolators 12 verschraubt. Auf der dem Leiter 14 abgewandten Seite der Eingussarmatur 13 ist ein dielektrisch günstig ausgebildetes elektrisch leitendes Winkelverbindungsstück 26 angeschlossen, welches eine um einen Winkel β gegen die Achse 2 geneigte Anschlussfläche aufweist. Der Winkel β weist hier den Wert 30° auf, es sind jedoch, entsprechend der Geometrie des Gehäuses 1, auch andere Werte des Winkel β vorstellbar, ein Winkelbereich von 25° bis 35°für diesen Winkel β lässt sich in der Regel sinnvoll realisieren. Die geneigte Anschlussfläche ist mit einem zylindrisch ausgebildeten Zwischenstück 27 verschraubt. Die der Anschlussfläche entgegengesetzte Seite des Zwischenstücks 27 ist mit einem Kontaktträger 32 verschraubt. Das Zwischenstück 27 erstreckt sich entlang einer Achse 41, die in der gleichen Ebene liegt wie die Achsen 2 und 3 und die gegenüber der Achse 2 um den Winkel β geneigt ist.

Der Kontaktträger 32 ist dielektrisch günstig ausgebildet, er ist aus Metall gefertigt. Der Kontaktträger 32 trägt, wie bereits früher beschrieben, den entlang der Achse 3 beweglichen Trennerkontakt 35. Der Kontaktträger 32 ist durch ein weiteres, entlang einer Achse 33 erstrecktes Zwischenstück 27, ein weiteres Winkelverbindungsstück 26 und eine Eingussarmatur 13 mit dem Leiter 21 verbunden, wie dies bereits im Zusammenhang mit der Fig.2 beschrieben wurde. Die Achse 33 schneidet die Achse 2 unter einem Winkel β. Die beiden Achsen 41 und 33 schneiden sich in einem auf der Achse 3 im Bereich des beweglichen Trennerkontakts 35 liegenden Schnittpunkt 42. Mindestens eines der beiden Zwischenstücke 27 wird jedoch mit einer nicht dargestellten Ausgleichsvorrichtung versehen, die bei der Montage des Trenners mechanische Toleranzen und im Betrieb des Trenners Wärmedehnungen ausgleichen kann, die entlang der Achsen 41 und 33 wirken, sodass die tragenden Isolatoren 12 nicht durch mechanische Spannungen überlastet werden können.

Ein Leiter 43 stellt den aktiven Teil des Abgangs bzw. der Einspeisung dar. Der Leiter 43 wird von einem mit Isoliergas unter Druck gefüllten Anschlussgehäuse 44 gegen Umwelteinflüsse geschützt. Die Öffnung 7 des Gehäuses 1 ist hier durch einen scheibenförmig ausgebildeten Isolator 12 verschlossen, der eine elektrisch leitende Eingussarmatur 13 aufweist. Die Eingussarmatur 13 ist mit dem Leiter 43 verschraubt. Der Isolator 12 wird mittels eines Aussenrings 15 gehalten, in den Nuten eingelassen sind für die Aufnahme von nicht dargestellten Dichtungsringen. Der Aussenring 15 ist aus zwei gleich ausgebildeten metallischen, elektrisch leitenden Ringen zusammengesetzt. Der Isolator 12 und der Aussenring 15 werden durch einen mit dem Flansch 11 verschraubten Anschlussflansch 45 des Anschlussgehäuses 44 in Position gehalten. Auf der dem Leiter 43 entgegengesetzten Seite der Eingussarmatur 13 ist ein zylindrischer, dielektrisch günstig ausgebildeter Kontaktträger 46 angeschraubt, in welchen ein Gegenkontakt 30 und Spiralkontakte 31 eingelassen sind, ähnlich wie beim Kontaktträger 28 in Fig.2. Der Kontaktträger 46, die Eingussarmatur 13 und der Leiter 43 weisen eine gemeinsame Mittelachse auf, die mit der Achse 3 deckungsgleich ist.

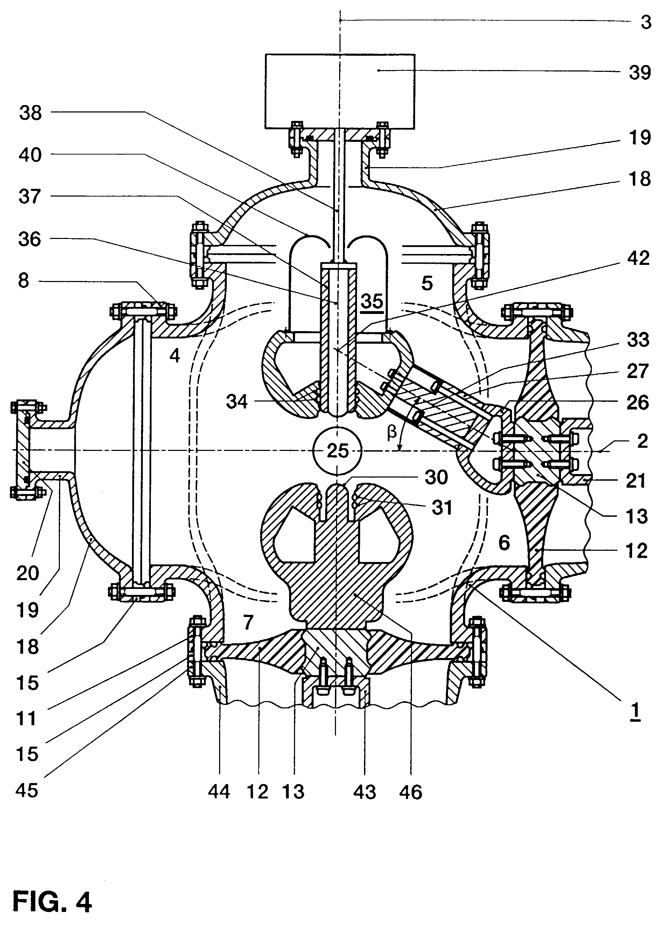

Die Fig.4 zeigt einen vereinfachten Schnitt durch eine schematisch dargestellte dritte Ausführungsform eines Trenners für metallgekapselte gasisolierte Hochspannungsschaltanlagen in ausgeschaltetem Zustand. Dieser Trenner ist als Winkeltrenner ausgebildet, wie er beispielsweise in metallgekapselten gasisolierten Hochspannungsschaltanlagen vorgesehen wird, um besonders raumsparende trennbare Verbindungsmöglichkeiten zu schaffen. Die Leiter 43 und 21 stellen hier die jeweiligen, im Bedarfsfall zu verbindenden oder zu trennenden Enden der auf Hochspannungspotential liegenden Anlagenteile dar. Die Verbindung des Leiters 21 mit dem beweglichen Trennerkontakt 35 ist gleich ausgeführt, wie dies in der Fig.2 beschrieben ist. Auch hier ist das Zwischenstück 27 um einen Winkel β gegen die Achse 2 geneigt. Der Winkel β weist hier den Wert 30° auf, es sind jedoch, entsprechend der Geometrie des Gehäuses 1, auch andere Werte des Winkel β vorstellbar, ein Winkelbereich von 25° bis 35° für diesen Winkel β lässt sich in der Regel sinnvoll realisieren. Das Zwischenstück 27 erstreckt sich entlang einer Achse 33, die in der gleichen Ebene liegt wie die Achsen 2 und 3 und die gegenüber der Achse 2 um den Winkel β geneigt ist. Der Kontaktträger 32 ist dielektrisch günstig ausgebildet, er ist aus Metall gefertigt. Der Kontaktträger 32 trägt, wie bereits früher beschrieben, den entlang der Achse 3 beweglichen Trennerkontakt 35.

Die Achse 33 schneidet die Achse 3 in einem im Bereich des beweglichen Trennerkontakts 35 liegenden Schnittpunkt 42. Ein Leiter 43 stellt den aktiven Teil des Abgangs bzw. der Einspeisung dar. Der Leiter 43 wird von einem mit Isoliergas unter Druck gefüllten Anschlussgehäuse 44 gegen Umwelteinflüsse geschützt. Die Öffnung 7 des Gehäuses 1 ist hier durch einen scheibenförmig ausgebildeten Isolator 12 verschlossen, der eine elektrisch leitende Eingussarmatur 13 aufweist. Die Eingussarmatur 13 ist mit dem Leiter 43 verschraubt. Der Isolator 12 wird mittels eines Aussenrings 15 gehalten, in den Nuten eingelassen sind für die Aufnahme von nicht dargestellten Dichtungsringen. Der Aussenring 15 ist aus zwei gleich ausgebildeten metallischen, elektrisch leitenden Ringen zusammengesetzt. Der Isolator 12 und der Aussenring 15 werden durch einen mit dem Flansch 11 verschraubten Anschlussflansch 45 des Anschlussgehäuses 44 in Position gehalten. Auf der dem Leiter 43 entgegengesetzten Seite der Eingussarmatur 13 ist ein zylindrischer, dielektrisch günstig ausgebildeter Kontaktträger 46 angeschraubt, in welchen ein Gegenkontakt 30 und Spiralkontakte 31 eingelassen sind, ähnlich wie beim Kontaktträger 28 in Fig.2. Der Kontaktträger 46, die Eingussarmatur 13 und der Leiter 43 weisen eine gemeinsame Mittelachse auf, die mit der Achse 3 deckungsgleich ist.

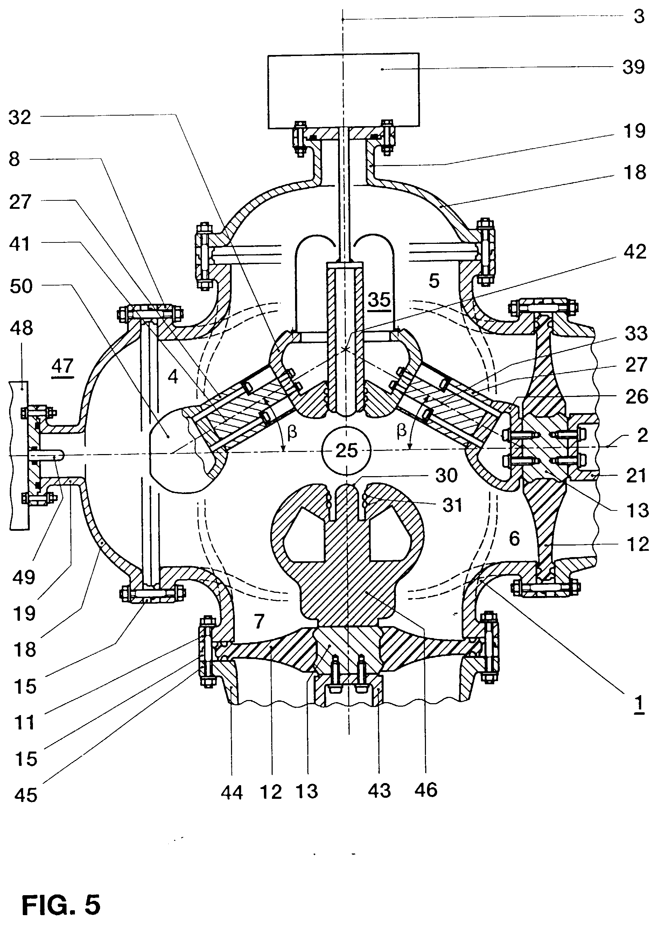

Die Fig.5 zeigt eine modifizierte Ausführung des Trenners gemäss Fig.4, und zwar ist dieser Trenner zusätzlich mit einem Erder 47 ausgerüstet. Der Erder 47 weist einen schematisch dargestellten Antrieb 48 auf, der einen in Ausschaltstellung dargestellten Schaltstift 49 entlang der Achse 2 in Richtung auf einen feststehenden Gegenkontakt 50 zu bewegt. In den Gegenkontakt 50 ist eine nicht dargestellte Kontaktanordnung eingelassen, welche den Schaltstift 49 aufnimmt. Der Gegenkontakt 50 ist mit einem Zwischenstück 27 verschraubt, welches mit dem Kontaktträger 32 elektrisch leitend verbunden ist. Dieses Zwischenstück 27 erstreckt sich längs einer Achse 41, die in der gleichen Ebene liegt wie die Achsen 2 und 3 und die gegenüber der Achse 2 um den Winkel β geneigt ist. Die beiden Achsen 41 und 33 schneiden sich in einem auf der Achse 3 im Bereich des beweglichen Trennerkontakts 35 liegenden Schnittpunkt 42. Die beiden Zwischenstücke 27 müssen hier jedoch nicht mit einer Ausgleichsvorrichtung für Fertigungstoleranzen und Wärmedehnungen versehen werden.

Bei geöffnetem Trenner kann nun, wenn betriebliche Gründe dies erfordern, die mit dem Leiter 21 verbundene Seite des Trenners geerdet werden. Es ist jedoch auch möglich, den Kontaktträger 46 so zu modifizieren, dass das Zwischenstück 27 und der mit ihm verbundene Gegenkontakt 50 an ihm befestigt werden können, sodass anstatt der mit dem Leiter 21 verbundenen Seite nun die mit dem Leiter 43 verbundene Seite des Trenners bei Bedarf geerdet werden kann. Wenn im Gehäuse 1 kein Platz für den Einbau eines Erders vorhanden ist, dann werden die für ordnungsgemässe Revisionen der metallgekapselten gasisolierten Schaltanlage nötigen Erdungsgeräte in dem jeweiligen Trenner benachbarten Gehäusen untergebracht.

Grundsätzlich sind die in den Fig.l bis 5 gezeigten Trennervarianten für Hochspannungsschaltanlagen in jeder beliebigen Einbaulage einbaubar, die durch das Anlagenkonzept der betreffenden metallgekapselten gasisolierten Schaltanlage vorgegeben wird. Die verschiedenen Trennervarianten lassen sich mit Hilfe einiger weniger Gleichteile baukastenartig in dem für alle Varianten gleichen Gehäuse 1 konstruktiv verwirklichen. Die Kosten für die Lagerhaltung lassen sich, wegen der vergleichsweise geringen Anzahl von Gleichteilen, vorteilhaft niedrig halten. Besonders vorteilhaft ist es auch, dass für alle in einer metallgekapselten gasisolierten Hochspannungsschaltanlage benötigten Trennervarianten nur ein einziger Gehäusetyp nämlich das Gehäuse 1 benötigt wird.

Die Abdeckungen 20, wie sie in den Fig.2 und 4 zum Verschliessen der Stutzen 19 vorgesehen sind, lassen sich vorteilhaft durch Berstscheiben ersetzen, wenn die Isolatoren 12 als druckdichte Schottungsisolatoren ausgeführt werden. Wenn die Isolatoren 12 mit Durchlässen versehen sind, die einen Gasaustausch mit benachbarten Gehäusen erlauben, so können die Berstscheiben auch in den benachbarten Gehäusen vorgesehen werden. Die Abdeckung 20 in der Fig.2 kann jedoch auch mit einem Erder bestückt werden, allerdings muss dann der Kontakträger 28 mit einer dielektrisch günstig ausgebildeten Kontaktierungsmöglichkeit für den Schaltstift dieses Erders versehen werden.

Beim Einschalten des Trenners wird durch die durch den Antrieb 39 betätigte Isolierstange 38 der bewegliche Trennerkontakt 35 entlang der Achse 3 auf den feststehenden Gegenkontakt 30 zu bewegt. Eine gegebenenfalls durch Restladungen und/oder durch eine zwischen dem Kontaktträger 32 und dem Kontaktträger 28 bzw. 46 anliegende betriebsfrequente Spannung hervorgerufene Vorzündung zwischen der beweglichen Kontaktanordnung 35 und dem feststehenden Gegenkontakt 30 wird durch jede der Trennervarianten einwandfrei beherrscht. Eine Ausweitung des Vorzündlichtbogens hin zur Wand des Gehäuses 1 kann, bedingt durch die geometrische Anordnung der Trenneraktivteile, nicht auftreten. Der Antrieb 39 des Trenners ist so ausgelegt, dass er in jedem möglichen Betriebsfall die bewegliche Kontaktanordnung 35 sicher in die vorgesehene Einschaltstellung bewegt, sodass stets eine einwandfreie Stromführung über das dafür vorgesehene Kontaktrohr 37 und die Spiralkontakte 31 und 34 gewährleistet ist. Ebenso erfolgt auch das Öffnen des Trenners stets einwandfrei.

Die erwähnten Erder können ebenfalls lageunabhängig betätigt werden, sodass auch von daher keine lagebedingten Einbaubeschränkungen bestehen. Diese Erder können sowohl als Arbeitserder als auch als Schnellerder ausgebildet sein. Die Baugruppe Trenner ist sehr kompakt ausgeführt und beansprucht in axialer Richtung besonders wenig Platz, sodass das mit diesen Trennern versehene Schaltfeld mit besonders kleinen Abbmessungen ausgeführt werden kann.

Abknickungen in der Strombahn der gasisolierten Schaltanlage haben zur Folge, dass an diesen Stellen im Fall des Auftretens von hohen Fehlerströmen, insbesondere von Stosskurzschlussströmen, hohe elektrodynamische Kräfte in der Strombahn auftreten. Die Trennervarianten gemäss Fig.2 und Fig.3 sind elektrodynamisch derart günstig ausgebildet, dass diese elektrodynamischen Kräfte zumindest teilweise kompensiert werden, sodass die auf die tragenden Isolatoren einwirkenden Biegemomente vergleichsweise klein gehalten werden können, die die Trenneraktivteile tragenden Isolatoren 12 können deshalb ohne zusätzliche Verstärkung diese Momente aufnehmen.

Das Gehäuse 1 ist in den Fig.l bis 5 als symmetrisch ausgebildetes Gehäuse dargestellt. Wenn das Anlagenkonzept der Hochspannungsanlage es jedoch erfordern sollte, dass, beispielsweise zum zusätzlichen Einbau von Erdern und Berstscheiben, stets ein gleich ausgebildetes zusätzliches Gehäuse mit entsprechenden Flanschöffnungen an das Gehäuse 1 angeflanscht werden muss, so kann dieses zusätzliche Gehäuse mit dem Gehäuse 1 zu einem einstückigen Gussteil zusammengefasst werden. Wenn entsprechende Stückzahlen benötigt werden, so bringt ein derartiges Gussteil, welches dann nur noch zu einer der Achsen 2,3 symmetrisch ist, wirtschaftliche Vorteile, da eine aufwendige Flanschverbindung eingespart werden kann. Die Vorteile des oben beschriebenen, symmetrisch ausgebildeten Gehäuses 1 bezüglich der Trennereinbaumöglichkeiten bleiben natürlich auch dann, wenn dieses Gehäuse 1 vollständig in das zusätzliche Gehäuse integriert ist, erhalten.

### BEZEICHNUNGSLISTE

- 1: Gehäuse
- 2,3: Achsen
- 4,5,6,7: Öffnungen
- 8,9,10,11: Flansche
- 12: Isolator
- 13: Eingussarmatur
- 14: Leiter
- 15: Aussenring
- 16: Anschlussflansch
- 17: Nachbargehäuse
- 18: Deckelflansch
- 19: Stutzen
- 20: Abdeckung
- 21: Leiter
- 22: Anschlussflansch
- 23: Nachbargehäuse
- 24: Innenraum
- 25: Sichtfenster
- 26: Winkelverbindungsstück
- 27: Zwischenstück
- 28: Kontaktträger
- 29: Achse
- 30: Gegenkontakt
- 31: Spiralkontakte
- 32: Kontaktträger
- 33: Achse
- 34: Spiralkontakte
- 35: beweglicher Trennerkontakt
- 36: Schaltstift
- 37: Kontaktrohr
- 38: Isolierstange
- 39: Antrieb
- 40: Abschirmung
- 41: Achse
- 42: Schnittpunkt
- 43: Leiter
- 44: Anschlussgehäuse
- 45: Anschlussflansch
- 46: Kontaktträger
- 47: Erder
- 48: Antrieb
- 49: Schaltstift
- 50: Gegenkontakt
- α, β: Winkel

## Patentansprüche

1. Trenner für eine metallgekapselte gasisolierte Hochspannungsschaltanlage mit einem Gehäuse (1), welches mindestens zwei sich unter einem ersten Winkel (α) schneidende Achsen (2,3) aufweist, mit zwei auf einer ersten (3) dieser Achsen angeordneten Kontaktträgern (32,28), welche durch Halteelemente positioniert sind, mit einem als Trennstrecke ausgelegten Abstand zwischen den beiden Kontaktträgern (32,28), mit einem längs dieser ersten Achse (3) beweglichen, von einem ersten Kontaktträger (32) geführten Trennerkontakt (35), der im eingeschalteten Zustand des Trenners den Abstand zwischen den beiden Kontaktträgern (32,28) elektrisch leitend überbrückt, wobei die erste Achse (3) und eine zweite Achse (2) jeweils eine Symmetrieachse des Gehäuses (1) bilden, und das Gehäuse (1) mindestens vier mit Flanschen (8,9,10,11) versehene Öffnungen (4,5,6,7) mit gleichem Durchmesser aufweist, deren Zentrum auf einer der beiden Achsen (2,3) liegt und die im gleichen Abstand von dem Schnittpunkt der beiden Achsen (2,3) angeordnet sind, dadurch gekennzeichnet,
- dass der Schnittpunkt der beiden Achsen (2,3) in der Mitte zwischen den beiden Kontaktträgern (32,28) liegt,
- dass das erste, für den ersten Kontaktträger (32) vorgesehene Halteelement, eine dritte Achse (33) aufweist, die unter einem zweiten Winkel (β) gegen die zweite Achse (2) geneigt ist,
- dass das zweite, für den zweiten Kontaktträger (28) vorgesehene Halteelement, eine vierte Achse (29) aufweist, die unter dem zweiten Winkel (β) gegen die zweite Achse (2) geneigt ist, und
- dass die dritte (33) und die vierte Achse (29) parallel zueinander verlaufen und in einer Ebene mit der ersten (3) und der zweiten Achse (2) liegen.

2. Trenner für eine metallgekapselte gasisolierte Hochspannungsschaltanlage mit einem Gehäuse (1), welches mindestens zwei sich unter einem ersten Winkel (α) schneidende Achsen (2,3) aufweist, mit zwei auf einer ersten (3) dieser Achsen angeordneten Kontaktträgern (32,46), welche durch Halteelemente positioniert sind, mit einem als Trennstrecke ausgelegten Abstand zwischen den beiden Kontaktträgern (32,46), mit einem längs dieser ersten Achse (3) beweglichen, von einem ersten Kontaktträger (32) geführten Trennerkontakt (35), der im eingeschalteten Zustand des Trenners den Abstand zwischen den beiden Kontaktträgern (32,46) elektrisch leitend überbrückt, wobei die erste Achse (3) und eine zweite Achse (2) jeweils eine Symmetrieachse des Gehäuses (1) bilden, und das Gehäuse (1) mindestens vier mit Flanschen (8,9,10,11) versehene Öffnungen (4,5,6,7) mit gleichem Durchmesser aufweist, deren Zentrum auf einer der beiden Achsen (2,3) liegt und die im gleichen Abstand von dem Schnittpunkt der beiden Achsen (2,3) angeordnet sind, dadurch gekennzeichnet,
- dass der Schnittpunkt der beiden Achsen (2,3) in der Mitte zwischen den beiden Kontaktträgern (32,46) liegt,
- dass das erste, für den ersten Kontaktträger (32) vorgesehene Halteelement, eine dritte Achse (33) aufweist, die unter einem zweiten Winkel (β) gegen die zweite Achse (2) geneigt ist,
- dass das zweite, für den ersten Kontaktträger (32) vorgesehene Halteelement, eine fünfte Achse (41) aufweist, die unter dem zweiten Winkel (β) gegen die zweite Achse (2) geneigt ist,
- dass die dritte (33) und die fünfte Achse (41) in einer Ebene mit der ersten (3) und der zweiten Achse (2) liegen, wobei sich die dritte (33) und die fünfte Achse (41) in einem auf der ersten Achse (3) gelegenen Schnittpunkt (42) schneiden, und
- dass ein zweiter Kontaktträger (46) dem ersten Kontaktträger (32) gegenüberstehend auf der ersten Achse (3) angeordnet ist.

3. Trenner für eine metallgekapselte gasisolierte Hochspannungsschaltanlage mit einem Gehäuse (1), welches mindestens zwei sich unter einem ersten Winkel (α) schneidende Achsen (2,3) aufweist, mit zwei auf einer ersten (3) dieser Achsen angeordneten Kontaktträgern (32,46), welche durch Halteelemente positioniert sind, mit einem als Trennstrecke ausgelegten Abstand zwischen den beiden Kontaktträgern (32,46), mit einem längs dieser ersten Achse (3) beweglichen, von einem ersten Kontaktträger (32) geführten Trennerkontakt (35), der im eingeschalteten Zustand des Trenners den Abstand zwischen den beiden Kontaktträgern (32,46) elektrisch leitend überbrückt, wobei die erste Achse (3) und eine zweite Achse (2) jeweils eine Symmetrieachse des Gehäuses (1) bilden, und das Gehäuse (1) mindestens vier mit Flanschen (8,9,10,11) versehene Öffnungen (4,5,6,7) mit gleichem Durchmesser aufweist, deren Zentrum auf einer der beiden Achsen (2,3) liegt und die im gleichen Abstand von dem Schnittpunkt der beiden Achsen (2,3) angeordnet sind, dadurch gekennzeichnet,
- dass der Schnittpunkt der beiden Achsen (2,3) in der Mitte zwischen den beiden Kontaktträgern (32,46) liegt,
- dass das erste, für den ersten Kontaktträger (32) vorgesehene Halteelement, eine dritte Achse (33) aufweist, die unter einem zweiten Winkel (β) gegen die zweite Achse (2) geneigt ist,
- dass die dritte Achse (33) in einer Ebene mit der ersten (3) und der zweiten Achse (2) liegt und
- dass ein zweiter Kontaktträger (46) dem ersten Kontaktträger (32) gegenüberstehend auf der ersten Achse (3) angeordnet ist.

4. Trenner nach Anspruch 3, dadurch gekennzeichnet,
- dass der erste Kontaktträger (32) mittels eines dritten Halteelements mit einem feststehenden Gegenkontakt (50) eines Erders (47) verbunden ist,
- dass das dritte Halteelement, eine fünfte Achse (41) aufweist, die unter dem zweiten Winkel (β) gegen die zweite Achse (2) geneigt ist, und
- dass die dritte (33) und die fünfte Achse (41) in einer Ebene mit der ersten (3) und der zweiten Achse (2) liegen, wobei sich die dritte (33) und die fünfte Achse (41) in einem auf der ersten Achse (3) gelegenen Schnittpunkt (42) schneiden.

5. Trenner nach Anspruch 4, dadurch gekennzeichnet,
- dass mindestens eines der beiden Halteelemente so ausgelegt ist, dass es in axialer Richtung auftretende Toleranzen und Wärmedehnungen kompensieren kann.

6. Trenner nach einem der Ansprüche 1 bis 3, dadurch gekennzeichnet,
- dass lediglich ein Teil der Länge der Trennstrecke die axiale Erstreckung des Trenners beeinflusst.

7. Trenner nach einem der Ansprüche 1 bis 3, dadurch gekennzeichnet,
- dass das Gehäuse (1) in Richtung der ersten Achse (3) verlängert ist, sodass diese erste Achse (3) die einzige Symmetrieachse des Gehäuses (1) darstellt.

8. Trenner nach einem der Ansprüche 1 bis 7, dadurch gekennzeichnet,
- dass der erste Winkel (α) als rechter Winkel ausgebildet ist, und
- dass auf jeder der beiden Achsen (2,3) jeweils zwei der Öffnungen (4,5,6,7) vorgesehen sind.

9. Trenner nach einem der Ansprüche 1 bis 8, dadurch gekennzeichnet,
- dass durch den Schnittpunkt der beiden Achsen (2,3), senkrecht zu der Ebene in welcher die beiden Achsen (2,3) liegen, eine weitere Symmetrieachse angeordnet ist, und
- dass dort, wo diese weitere Symmetrieachse die Wand des Gehäuses (1) durchstösst, mit dieser weiteren Symmetrieachse als Zentrum, mindestens ein zylindrisch ausgebildetes Sichtfenster (25) in die Wand des Gehäuses (1) eingelassen ist.

## Claims

1. Disconnector for a metal encapsulated, gas insulated high voltage switchgear with a housing (1) which has at least two axes (2, 3) which intersect at a first angle (α), with two contact carriers (32, 28) which are arranged on a first axis (3) of these axes and are positioned by means of securing elements, with a distance, configured as an isolating distance, between the two contact carriers (32, 28), with a disconnector contact (35), which can move along this first axis (3), is guided by a first contact carrier (32) and in the switched-on state of the disconnector bridges the distance between the two contact carriers (32, 28) in an electrically conductive manner, the first axis (3) and a second axis (2) each forming an axis of symmetry of the housing (1), and the housing (1) having at least four openings (4, 5, 6, 7) which are provided with flanges (8, 9, 10, 11) and have the same diameter and whose centre is located on one of the two axes (2, 3) and which are arranged at the same distance from the intersection point of the two axes (2, 3), characterized in that
- the intersection point of the two axes (2, 3) is located in the centre between the two contact carriers (32, 28),
- in that the first securing element which is provided for the first contact carrier (32) has a third axis (33) which is inclined at a second angle (β) with respect to the second axis (2),
- in that the second securing element which is provided for the second contact carrier (28) has a fourth axis (29) which is inclined at the second angle (β) with respect to the second axis (2), and
- in that the third axis (33) and the fourth axis (29) run parallel to one another and are located in a plane with the first axis (3) and the second axis (2).

2. Disconnector for a metal encapsulated, gas insulated high voltage switchgear with a housing (1) which has at least two axes (2, 3) which intersect at a first angle (α), with two contact carriers (32, 46) which are arranged on a first axis (3) of these axes and are positioned by means of securing elements, with a distance, configured as an isolating distance, between the two contact carriers (32, 46), with a disconnector contact (35), which can move along this first axis (3), is guided by a first contact carrier (32) and in the switched-on state of the disconnector bridges the distance between the two contact carriers (32, 46) in an electrically conductive manner, the first axis (3) and a second axis (2) each forming an axis of symmetry of the housing (1), and the housing (1) having at least four openings (4, 5, 6, 7) which are provided with flanges (8, 9, 10, 11) and have the same diameter and whose centre is located on one of the two axes (2, 3) and which are arranged at the same distance from the intersection point of the two axes (2, 3), characterized in that
- the intersection point of the two axes (2, 3) is located in the centre between the two contact carriers (32, 46),
- in that the first securing element which is provided for the first contact carrier (32) has a third axis (33) which is inclined at a second angle (β) with respect to the second axis (2),
- in that the second securing element which is provided for the first contact carrier (32) has a fifth axis (41) which is inclined at the second angle (β) with respect to the second axis (2),
- in that the third axis (33) and the fifth axis (41) are located in a plane with the first axis (3) and the second axis (2), the third axis (33) and the fifth axis (41) intersecting at an intersection point (42) which lies on the first axis (3), and
- in that a second contact carrier (46) is arranged opposite the first contact carrier (32) on the first axis (3).

3. Disconnector for a metal encapsulated, gas insulated high voltage switchgear with a housing (1) which has at least two axes (2, 3) which intersect at a first angle (α), with two contact carriers (32, 46) which are arranged on a first axis (3) of these axes and are positioned by means of securing elements, with a distance, configured as an isolating distance, between the two contact carriers (32, 46), with a disconnector contact (35), which can move along this first axis (3), is guided by a first contact carrier (32) and in the switched-on state of the disconnector bridges the distance between the two contact carriers (32, 46) in an electrically conductive manner, the first axis (3) and a second axis (2) each forming an axis of symmetry of the housing (1), and the housing (1) having at least four openings (4, 5, 6, 7) which are provided with flanges (8, 9, 10, 11) and have the same diameter and whose centre is located on one of the two axes (2, 3) and which are arranged at the same distance from the intersection point of the two axes (2, 3), characterized in that
- the intersection point of the two axes (2, 3) is located in the centre between the two contact carriers (32, 46),
- in that the first securing element which is provided for the first contact carrier (32) has a third axis (33) which is inclined at a second angle (β) with respect to the second axis (2),
- in that the third axis (33) is located in a plane with the first axis (3) and the second axis (2), and
- in that a second contact carrier (46) is arranged opposite the first contact carrier (32) on the first axis (3).

4. Disconnector according to Claim 3, characterized in that
- the first contact carrier (32) is connected to a fixed mating contact (50) of an earth connection (47) by means of a third securing element,
- in that the third securing element has a fifth axis (41) which is inclined at the second angle (β) with respect to the second axis (2), and
- in that the third axis (33) and the fifth axis (41) are located in a plane with the first axis (3) and the second axis (2), the third axis (33) and the fifth axis (41) intersecting at an intersection point (42) lying on the first axis (3).

5. Disconnector according to Claim 4, characterized in that
- at least one of the two securing elements is configured in such a way that it can compensate tolerances and thermal expansions occurring in the axial direction.

6. Disconnector according to one of Claims 1 to 3, characterized in that
- only part of the length of the isolating distance influences the axial extent of the disconnector.

7. Disconnector according to one of Claims 1 to 3, characterized in that
- the housing (1) is lengthened in the direction of the first axis (3) so that this first axis (3) constitutes the only axis of symmetry of the housing (1).

8. Disconnector according to one of Claims 1 to 7, characterized in that
- the first angle (α) is constructed as a right angle, and
- in that in each case two of the openings (4, 5, 6, 7) are provided on each of the two axes (2, 3).

9. Disconnector according to one of Claims 1 to 8, characterized in that
- a further axis of symmetry is arranged through the intersection point of the two axes (2, 3) perpendicularly to the plane in which the two axes (2, 3) are located, and
- in that at the point where this further axis of symmetry penetrates the wall of the housing (1), with this further axis of symmetry as a centre, at least one viewing window (25) of cylindrical construction is let into the wall of the housing (1).

## Revendications

1. Sectionneur pour une installation de commutation à haute tension blindée et à isolation gazeuse, avec un boîtier (1), qui présente au moins deux axes (2, 3) se coupant sous un premier angle (α), avec deux porte-contacts (32, 28) disposés sur un premier (3) de ces axes, qui sont positionnés par des éléments de support, avec une distance conçue comme section de coupure entre les deux porte-contacts (32, 28), avec un contact de coupure (35) mobile le long de ce premier axe (3) et guidé par un premier porte-contact (32), qui, à l'état fermé du sectionneur, occupe de façon électriquement conductrice la distance entre les deux porte-contacts (32, 28), dans lequel le premier axe (3) et un deuxième axe (2) forment chacun un axe de symétrie du boîtier (1), et le boîtier (1) présente au moins quatre ouvertures (4, 5, 6, 7) de même diamètre pourvues de brides (8, 9, 10, 11), dont le centre se trouve sur l'un des deux axes (2, 3) et qui sont disposées à une égale distance du point d'intersection des deux axes (2, 3), caractérisé en ce que
- le point d'intersection des deux axes (2, 3) se trouve au milieu entre les deux porte-contacts (32, 28), en ce que
- le premier élément de support prévu pour le premier porte-contact (32) présente un troisième axe (33), qui est incliné d'un second angle (β) par rapport au deuxième axe (2), en ce que
- le second élément de support prévu pour le second porte-contact (28) présente un quatrième axe (29), qui est incliné du second angle (β) par rapport au deuxième axe (2), et en ce que
- le troisième (33) et le quatrième axes (29) sont parallèles l'un à l'autre et se trouvent dans un plan avec le premier (3) et le deuxième axes (2).

2. Sectionneur pour une installation de commutation à haute tension blindée et à isolation gazeuse, avec un boîtier (1), qui présente au moins deux axes (2, 3) se coupant sous un premier angle (α), avec deux porte-contacts (32, 46) disposés sur un premier (3) de ces axes, qui sont positionnés par des éléments de support, avec une distance conçue comme section de coupure entre les deux porte-contacts (32, 46), avec un contact de coupure (35) mobile le long de ce premier axe (3) et guidé par un premier porte-contact (32), qui, à l'état fermé du sectionneur, occupe de façon électriquement conductrice la distance entre les deux porte-contacts (32, 46), dans lequel le premier axe (3) et un deuxième axe (2) forment chacun un axe de symétrie du boîtier (1), et le boîtier (1) présente au moins quatre ouvertures (4, 5, 6, 7) de même diamètre pourvues de brides (8, 9, 10, 11), dont le centre se trouve sur l'un des deux axes (2, 3) et qui sont disposées à une égale distance du point d'intersection des deux axes (2, 3), caractérisé en ce que
- le point d'intersection des deux axes (2, 3) se trouve au milieu entre les deux porte-contacts (32, 46), en ce que
- le premier élément de support prévu pour le premier porte-contact (32) présente un troisième axe (33), qui est incliné d'un second angle (β) par rapport au deuxième axe (2), en ce que
- le second élément de support prévu pour le premier porte-contact (32) présente un cinquième axe (41), qui est incliné du second angle (β) par rapport au deuxième axe (2), en ce que
- le troisième (33) et le cinquième axes (41) se trouvent dans un plan avec le premier (3) et le deuxième axes (2), le troisième (33) et le cinquième axes (41) se coupant en un point d'intersection (42) situé sur le premier axe (3), et en ce que
- un second porte-contact (46) est disposé sur le premier axe (3) en face du premier porte-contact (32).

3. Sectionneur pour une installation de commutation à haute tension blindée et à isolation gazeuse, avec un boîtier (1), qui présente au moins deux axes (2, 3) se coupant sous un premier angle (α), avec deux porte-contacts (32, 46) disposés sur un premier (3) de ces axes, qui sont positionnés par des éléments de support, avec une distance conçue comme section de coupure entre les deux porte-contacts (32, 46), avec un contact de coupure (35) mobile le long de ce premier axe (3) et guidé par un premier porte-contact (32), qui, à l'état fermé du sectionneur, occupe de façon électriquement conductrice la distance entre les deux porte-contacts (32, 46), dans lequel le premier axe (3) et un deuxième axe (2) forment chacun un axe de symétrie du boîtier (1), et le boîtier (1) présente au moins quatre ouvertures (4, 5, 6, 7) de même diamètre pourvues de brides (8, 9, 10, 11), dont le centre se trouve sur l'un des deux axes (2, 3) et qui sont disposées à une égale distance du point d'intersection des deux axes (2, 3), caractérisé en ce que
- le point d'intersection des deux axes (2, 3) se trouve au milieu entre les deux porte-contacts (32, 46), en ce que
- le premier élément de support prévu pour le premier porte-contact (32) présente un troisième axe (33), qui est incliné d'un second angle (β) par rapport au deuxième axe (2), en ce que
- le troisième axe (33) se trouve dans un plan avec le premier (3) et le deuxième axes (2), et en ce que
- un second porte-contact (46) est disposé sur le premier axe (3) en face du premier porte-contact (32).

4. Sectionneur suivant la revendication 3, caractérisé en ce que
- le premier porte-contact (32) est raccordé au moyen d'un troisième élément de support à un contre-contact fixe (50) d'une prise de terre (47), en ce que
- le troisième élément de support présente un cinquième axe (41), qui est incliné du second angle (β) par rapport au deuxième axe (2), et en ce que
- le troisième (33) et le cinquième axes (41) se trouvent dans un plan avec le premier (3) et le deuxième axes (2), le troisième (33) et le cinquième axes (41) se coupant en un point d'intersection (42) situé sur le premier axe (3).

5. Sectionneur suivant la revendication 4, caractérisé en ce que
- au moins un des deux éléments de support est conçu de telle façon qu'il puisse compenser des tolérances et des dilatations thermiques survenant en direction axiale.

6. Sectionneur suivant l'une quelconque des revendications 1 à 3, caractérisé en ce que
- seule une partie de la longueur de la section de coupure influence l'extension axiale du sectionneur.

7. Sectionneur suivant l'une quelconque des revendications 1 à 3, caractérisé en ce que
- le boîtier (1) est prolongé dans la direction du premier axe (3), de sorte que ce premier axe (3) représente le seul axe de symétrie du boîtier (1) .

8. Sectionneur suivant l'une quelconque des revendications 1 à 7, caractérisé en ce que
- le premier angle (α) est un angle droit, et en ce que
- il est chaque fois prévu deux des ouvertures (4, 5, 6, 7) sur chacun des deux axes (2, 3).

9. Sectionneur suivant l'une quelconque des revendications 1 à 8, caractérisé en ce que
- un axe de symétrie additionnel passe par le point d'intersection des deux axes (2, 3), perpendiculairement au plan dans lequel ces deux axes (2, 3) se trouvent, et en ce que
- au moins un hublot d'observation (25) de forme cylindrique est inséré dans la paroi du boîtier (1), avec cet axe de symétrie additionnel comme centre, là où cet axe de symétrie additionnel traverse la paroi du boîtier (1).
